# EUROPÄISCHE PATENTANMELDUNG

(11) **EP 1 336 823 A2**
(43) Veröffentlichungstag der Anmeldung: **20.08.2003**
(21) Anmeldenummer: 03003575.2
(22) Anmeldetag: 17.02.2003
(51) Int. Cl.: G01F 23/284, G01F 23/292

(54) **Verfahren zum Betrieb eines elektromagnetischen Füllstandsmessgerätes**

(30) Priorität: 16.02.2002 DE 10206463
(71) Anmelder: VEGA Grieshaber KG, 77709 Wolfach (DE)
(72) Erfinder: Körnle, Ralf, 77736 Zell am Harmersbach (DE)
(74) Vertreter: Patentanwälte Westphal, Mussgnug & Partner

(57) **Zusammenfassung**

Um ein Füllstandmessgerät (1) kunden- und wartungsfreundlich zu gestalten, ist eine mechanisch mit dem Füllstandmessgerät (1) verbindbare und wieder lösbare Schnittstelle (2) zum Anschluss eines elektrischen Gerätes, z.B. eines Personalcomputers oder eines Anzeige- oder Bedienmoduls vorgesehen. Die Schnittstelle ist vorzugsweise in das Anzeige- und Bedienmodul (2) integriert. Die Übertragung von Daten sowie einer Versorgungsspannung zwischen dem Füllstandmessgerät (1) und der Schnittstelle (2) erfolgt z.B. durch induktive, kapazitive oder optische Kopplung. Die Schnittstelle (2) ist z.B. mittels einer Steckvorrichtung, einer Rastvorrichtung oder mittels eines Magneten mit dem Füllstandmessgerät (1) mechanisch verbindbar und wieder von ihm lösbar.

## Beschreibung

Die Erfindung betrifft ein Verfahren zum Betrieb eines Füllstandmessgerätes, wobei ein Messensor den Füllstand misst und in elektrische oder optische Messignale wandelt.

Die Erfindung betrifft weiter ein Füllstandmessgerät mit einem Messensor zur Messung des Füllstandes und zur Erzeugung eines elektrischen oder optischen den Füllstand repräsentierenden Messignales.

Zur Füllstandmessung festen Schüttgutes oder von Flüssigkeiten in einem Behälter oder Tank sind mehrere Messprinzipien bekannt. Als Beispiele wird auf die Füllstandmessung mit Radar, mittels Schwingstäben, mittels Druck und mittels Kapazitätsmessung verwiesen.

Bei der Füllstandmessung misst ein Messensor den Füllstand und erzeugt den Füllstand repräsentierende elektrische oder optische Messignale, die z.B. zu einer Anzeigevorrichtung oder eine Auswerteeinrichtung übertragen werden. Vor Inbetriebnahme eines Füllstandmessgerätes sind kundenspezifische Parametrierdaten in das Füllstandmessgerät einzugeben. Bei Austausch des Messensors sind diese Parametrierdaten erneut in das Füllstandmessgerät einzugeben. Diese Parametrierdaten werden z.B. mittels eines Anzeige- und Bedienmoduls in das Füllstandmessgerät eingegeben.

Es ist nun Aufgabe der Erfindung, ein Verfahren zum Betrieb eines Füllstandmessgerätes und ein Füllstandmessgerät möglichst kunden- und wartungsfreundlich zu gestalten.

Verfahrensmäßig wird diese Aufgabe mit den im Anspruch 1 angegebenen Merkmalen dadurch gelöst, dass zum Anschluß eines elektrischen Gerätes eine Schnittstelle mechanisch mit dem Füllstandmessgerät verbunden wird.

Vorrichtungsmäßig wird diese Aufgabe mit den im Anspruch 6 angegebenen Merkmalen dadurch gelöst, dass eine Schnittstelle zum Anschluß eines elektrischen Gerätes mechanisch mit dem Füllstandmessgerät verbindbar und wieder lösbar ist.

Das erfindungsgemäße Verfahren sieht vor, daß eine Schnittstelle zum Anschluß eines elektrischen Gerätes, z.B. eines Personalcomputers oder eines Anzeige- und Bedienmoduls, mechanisch mit dem Füllstandmessgerät verbunden wird. Die Schnittstelle kann z.B. in das Anzeige- und Bedienmodul integriert sein.

Die Schnittstelle kann beispielsweise mittels einer Steckvorrichtung, einer Rastvorrichtung oder mittels mindestens eines Magneten mechanisch mit dem Füllstandmessgerät verbunden und wieder von ihm getrennt werden.

Vorzugsweise sind die Schnittstelle und das Füllstandmessgerät galvanisch voneinander getrennt. Die Übertragung von Messignalen und Daten, z.B. Parametrierdaten, sowie der Versorgungsspannung kann auf induktivem, kapazitivem oder optischem Weg erfolgen.

Die Erfindung wird anhand der Figuren nun näher beschrieben und erläutert.

In der Zeichnung zeigen:
- Figur 1: ein erstes Ausführungsbeispiel und
- Figur 2: ein zweites Ausführungsbeispiel der Erfindung.

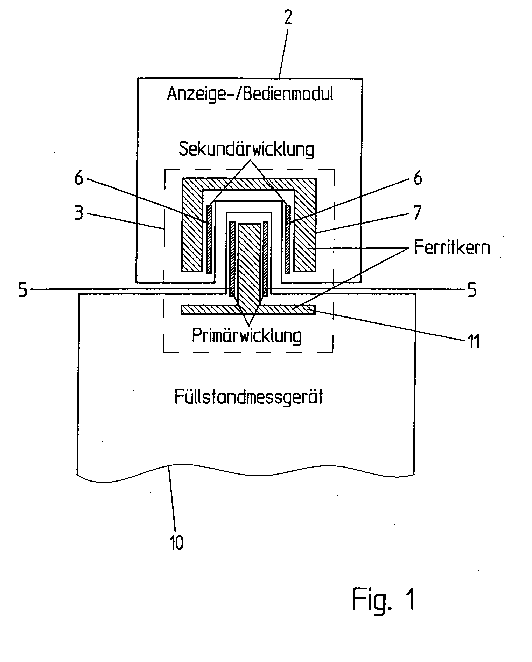

In der Figur 1 ist ein erstes Ausführungsbeispiel der Erfindung gezeigt.

Ein Füllstandmessgerät 1 zur Messung des Füllstandes einer Flüssigkeit oder eines Schüttgutes 10 ist mit einem Ferritkern 7 und mit einer Primärwicklung 5 ausgerüstet. Ein Anzeige- und Bedienmodul 2, das mit einer Sekundärwicklung 6 und ebenfalls einem Ferritkern 12 ausgestattet ist, ist mittels einer Steck-, einer Rastvorrichtung oder mittels mindestens eines Magneten auf das Füllstandmessgerät derart aufsetzbar, dass die Primärwicklung 5 und der Ferritkern 7 des Füllstandmessgeräts 1 in die Sekundärwicklung 6 und den Ferritkern 12 des Anzeige- und Bedienmoduls 2 eingetaucht sind.

Die Übertragung der vom Messensor erzeugten Messignale zum Anzeige- und Bedienmodul 2 erfolgt auf induktivem Weg mittels des induktiven Kopplers 3, der aus der Primärwicklung 7, der Sekundärwicklung 6 und der Ferritkerne 7 und 12 gebildet wird. Ebenso erfolgt die Datenübertragung vom Anzeige- und Bedienmodul 2 zum Füllstandmessgerät 5.

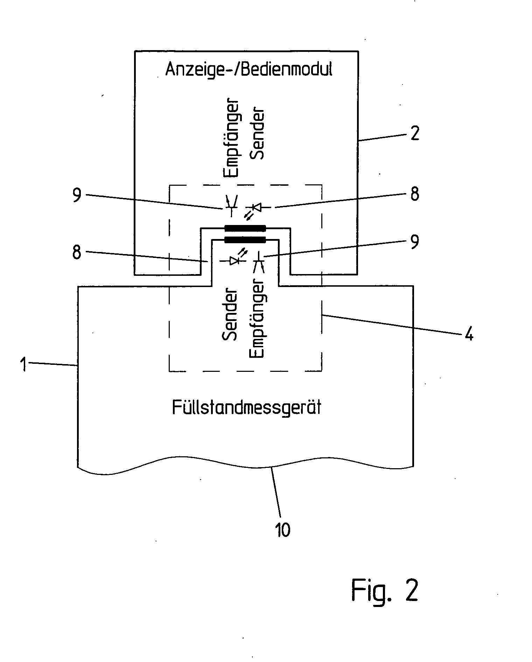

In Figur 2 ist ein zweites Ausführungsbeispiel der Erfindung abgebildet, das sich vom ersten in der Figur 1 dargestellten Ausführungsbeispiel dadurch unterscheidet, dass anstelle eines induktiven Kopplers ein optischer Koppler vorgesehen ist.

Das Füllstandmessgerät 1 ist mit einem optischen Sender 8 und einem optischen Empfänger 9 ausgerüstet. Ebenso ist das mittels einer Steck-, einer Rastvorrichtung oder mittels mindestens eines Magneten auf das Füllstandmessgerät 1 aufsetzbare Anzeige- und Bedienmodul 2 mit einem optischen Sender 8 und einem optischen Empfänger 9 ausgerüstet. Das Anzeige- und Bedienmodul 2 ist derart auf das Füllstandmessgerät 1 gesetzt, dass jeweils einem optischen Sender 8 ein optischer Empfänger 9 gegenüberliegt.

Sowohl die vom Füllstandmessgerät erzeugten Messignale als auch die vom Anzeige- und Bedienmodul zum Füllstandmessgerät 1 zu übertragenden Daten werden mittels des aus den optischen Sendern 8 und Empfängern 9 gebildeten optischen Kopplers übertragen.

Bei beiden Ausführungsbeispielen kann die Versorgungsspannung entweder induktiv oder optisch übertragen werden. Vorzugsweise wird für die Übertragung der Versorgungsspannung dieselbe Übertragungsart wie bei der Datenübertragung gewählt.

Anstelle eines Anzeige- und Bedienmoduls kann auch eine Schnittstelle zu einem elektrischen Gerät, z.B. zu einem Personalcomputer, mechanisch mit dem Füllstandsmessgerät verbunden und wieder gelöst werden.

### Bezugszeichenliste

- 1: Füllstandmessgerät
- 2: Anzeige- und Bedienmodul
- 3: Induktiver Koppler
- 4: Optischer Koppler
- 5: Primärwicklung
- 6: Sekundärwicklung
- 7: Ferritkern
- 8: Optischer Sender
- 9: Optischer Empfänger
- 10: Flüssigkeit, Schüttgut

## Patentansprüche

1. Verfahren zum Betrieb eines Füllstandmessgerätes (1), wobei ein Messensor den Füllstand misst und in elektrische oder optische Messignale wandelt,
**dadurch gekennzeichnet, dass** zum Anschluss eines elektrischen Gerätes eine Schnittstelle (2) mechanisch mit dem Füllstandmessgerät (1) verbunden wird.

2. Verfahren nach Anspruch 1,
**dadurch gekennzeichnet, dass** zur Parametrierung des Füllstandmessgerätes (1) ein Anzeige- und Bedienmodul (2) mechanisch mit dem Füllstandmessgerät (1) verbunden wird.

3. Verfahren nach Anspruch 1 oder 2,
**dadurch gekennzeichnet, dass** die Schnittstelle (2) mittels einer Steckvorrichtung, einer Rastvorrichtung oder mittels mindestens eines Magneten mit dem Füllstandmessgerät (1) verbunden wird.

4. Verfahren nach Anspruch 1, 2 oder 3,
**dadurch gekennzeichnet, dass** die Schnittstelle (2) galvanisch vom Füllstandmessgerät (1) getrennt ist.

5. Verfahren nach Anspruch 4,
**dadurch gekennzeichnet, dass** die Datenübertragung und/oder die Übertragung der Versorgungsspannung zwischen der Schnittstelle (2) und dem Füllstandmessgerät (1) induktiv mittels eines induktiven Kopplers (3), kapazitiv mittels eines kapazitiven Kopplers oder optisch mittels eines optischen Kopplers (4) erfolgt.

6. Füllstandmessgerät (1) mit einem Messensor zur Messung des Füllstandes und zur Erzeugung eines elektrischen oder optischen den Füllstand repräsentierenden Messignales,
**dadurch gekennzeichnet, dass** eine Schnittstelle (2) zum Anschluss eines elektrischen Gerätes mechanisch mit dem Füllstandmessgerät (1) verbindbar und lösbar ist.

7. Füllstandmessgerät nach Anspruch 6,
**dadurch gekennzeichnet, dass** zur Parametrierung des Füllstandmessgerätes (1) ein Anzeige- und Bedienmodul (2) mechanisch mit dem Füllstandmessgerät (1) verbindbar und lösbar ist.

8. Füllstandmessgerät nach Anspruch 6 oder 7,
**dadurch gekennzeichnet, dass** die Schnittstelle (2) mittels einer Steckvorrichtung, einer Rastvorrichtung oder mittels mindestens eines Magneten mit dem Füllstandmessgerät (1) mechanisch verbindbar und wieder lösbar ist.

9. Füllstandmessgerät nach Anspruch 6, 7 oder 8,
**dadurch gekennzeichnet, dass** die Schnittstelle (2) galvanisch vom Füllstandmessgerät (1) getrennt ist.

10. Füllstandmessgerät nach Anspruch 9,
**dadurch gekennzeichnet, dass** Daten und/oder die Versorgungsspannung zwischen der Schnittstelle (2) und dem Füllstandmessgerät (1) induktiv mittels eines induktiven Kopplers (3), kapazitiv mittels eines kapazitiven Kopplers und/oder optisch mittels eines optischen Kopplers (4) übertragbar sind.
